# EUROPEAN PATENT APPLICATION

(11) **EP 3 093 216 A1**
(43) Date of publication of application: **16.11.2016**
(21) Application number: 16165902.4
(22) Date of filing: 19.04.2016
(51) Int. Cl.: B62D 7/04, B62D 7/08, B62D 7/09

(54) **A STEERING SYSTEM FOR A SELF-PROPELLED CRANE**

(30) Priority: 21.04.2015 IT UB20150531
(71) Applicant: ORMIG S.p.A., 15076 Ovada (Alessandria) (IT)
(72) Inventor: REGGIO, Giuseppe, I-15019 STREVI (Alessandria) (IT); ASCHERO, Gian Paolo, I-15076 OVADA (Alessandria) (IT)
(74) Representative: Deambrogi, Edgardo

(57) **Abstract**

A steering system (9), mountable on a steering axle (10) of a vehicle (12), comprises at least a pair of wheels (16, 17), symmetrical with respect to a longitudinal center axis (a) of the vehicle (12), and further comprises an articulated leverage (18), so as that such an articulated leverage (18) lies at a height from the ground which is greater than the diameter of said wheels (16, 17).

## Description

### Technical field

In general, the present invention relates to the machinery industry for handling loads; in particular, the invention relates to a steering system for a self-propelled crane.

### Background of the invention

Generally, the load handling machines must balance the requirements of strength and balance with high mobility and small dimensions.

These two last parameters are especially affected by the steering system of the vehicle and the counterweight which serves to balance the same.

The dimensions being equal, the maneuverability of the machine can be enhanced only by increasing the steering angle of the steering wheels (generally, the rear axle wheels). Depending on the pitch of the machine (i.e., the distance between the front and rear axle), the steering angle of the rear wheels is expected to reach about 105 degrees, and suitable wheels are chosen according to the carrying capacity of the crane.

Traditionally, a load handling machines, for example a self-propelled crane, is provided with a steering system comprising an operating cylinder which drives the steering tie rods, so as to steer the vehicle wheels and to perform the maneuver. The cylinder and the tie rods are placed at the same level of the steering axle (connecting the wheel hubs).

However, the machines with medium to high load capacity must be equipped with wheels having such dimensions that achieving the desired steering angle (i.e., the above-mentioned 105 °) is prevented, since the reduced track width of the machine does not allow the mounting of a linkage capable of ensuring an optimal steering action, due to the wheels dimensions.

Therefore, according to the prior art, the machine track has to be increased (increasing also dimensions and weight), or the steering performances of the vehicle have to be sacrificed.

Understandably, such restrictions affect the maneuverability of the vehicle, as it will be more bulky because of the greater turning radius, which is a crucial parameter for what concerns the operation of vehicles within industrial hangars and warehouses.

### Summary of the invention

One object of the present invention is to solve the aforementioned problems.

To achieve this result, the steering linkage (generally, an articulated linkage), which allows the steering of the wheels, is conveniently located above the wheels, and connected to them by means of a steering member with a vertical axis.

Accordingly, the linkage being raised with respect to the axle shaft, the articulated linkage may extend adequately, without being restrained by the dimensions of the wheels; therefore, the track being equal, a vehicle in which the axle shaft and the steering linkage are vertically staggered allows optimal steering angles to be achieved, compared to a traditional vehicle.

Furthermore, according to a preferred embodiment of the invention, in a load handling vehicle (in particular, a self-propelled crane), the articulated linkage is associated with independent motors, acting on the vehicle wheels so as to cause the steering.

The motors and the articulated linkage cooperate in such a way as to impart different steering angles to the wheels on opposite sides of the vehicle of, so as to avoid the sliding of the wheels (and, therefore, conserving the pure rolling condition, which minimizes the turning radius and the traction force required for pulling the vehicle).

In summary, one or more motors, usually of the electric or hydraulic type, apply a steering torque (through the steering members) directly on the axle shafts supporting the wheels, and the wheels rotation on a side of the vehicle is transmitted, by means of the articulated linkage, to the wheels on the opposite side, achieving the desired turning radius. The geometry of the articulated linkage is configured so to allow different steering angles to be applied to wheels located on opposite sides of the vehicle.

The solution with independent motors is particularly advantageous, compared to the traditional operation by means of the hydraulic cylinder according to the prior art, since the overall width of the vehicle is limited (allowing the track width to be reduced).

The configuration provided in the present invention is also beneficial under a variety of aspects, in particular for what concerns the simple installation (as the limited overall dimensions allow to place the steering system even in the restricted space between the vehicle frame and the steering axle), maneuvering precision, overall dimensions and weights reduction, as well as optimization of fuel consumption and reduction of maintenance costs, thanks to the use of hydraulic or independent electric motors, that do not require complex hydraulic drive systems.

The above and other objects and advantages are achieved, according to an aspect of the invention, by a steering system of a mobile crane having the features of claim 1. Preferred embodiments are defined in the dependent claims.

### Brief description of the drawings

The functional and structural features of some preferred embodiments of a steering system for a self-propelled crane according to the invention will now be described. Reference is made to the accompanying drawings, in which:
- Figures 1 and 2 are a schematic front and top views of a steering system according to the prior art, respectively;
- Figure 3 is a schematic perspective view of a part of a vehicle comprising the steering system, according to one embodiment of the present invention;
- Figure 4 is a schematic top view of the steering system according to the embodiment of Figure 3;
- Figure 5 is a schematic perspective view of a detail of the vehicle as shown in Figure 3;
- Figure 6 is a schematic perspective view of the vehicle in Figure 5, shown in a different visual angle; and
- Figure 7 is a schematic partial view of the steering system, according to one embodiment of the present invention.

### Detailed description

Before explaining in detail a plurality of embodiments of the invention, it should be clear that the invention is not limited in its application to the construction details and the configuration of the components provided in the following description or illustrated in the drawings. The invention can be embodied differently and be implemented or carried out practically in different ways. It should also be understood that the phraseology and terminology have descriptive purposes and should not be construed as limiting.

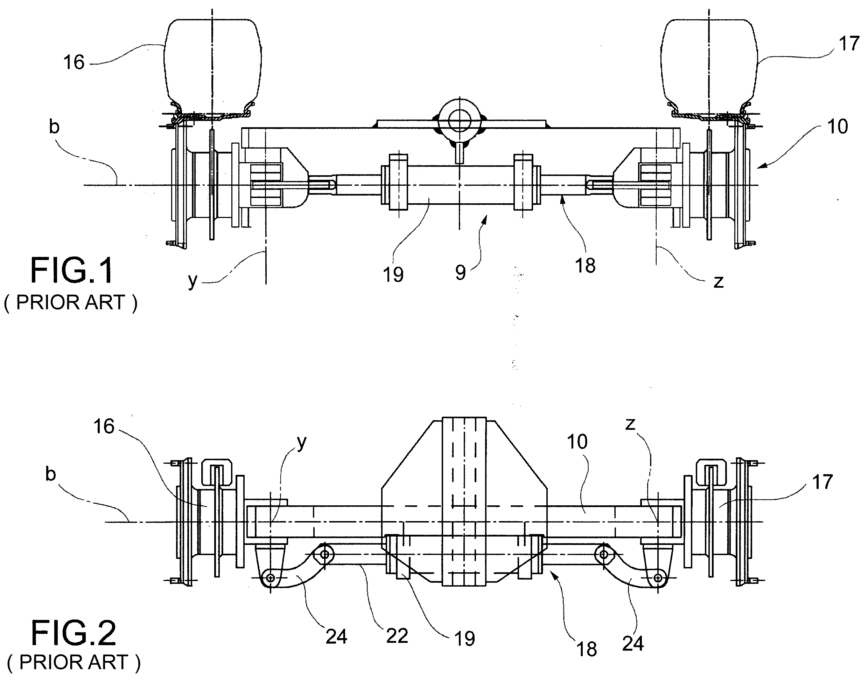

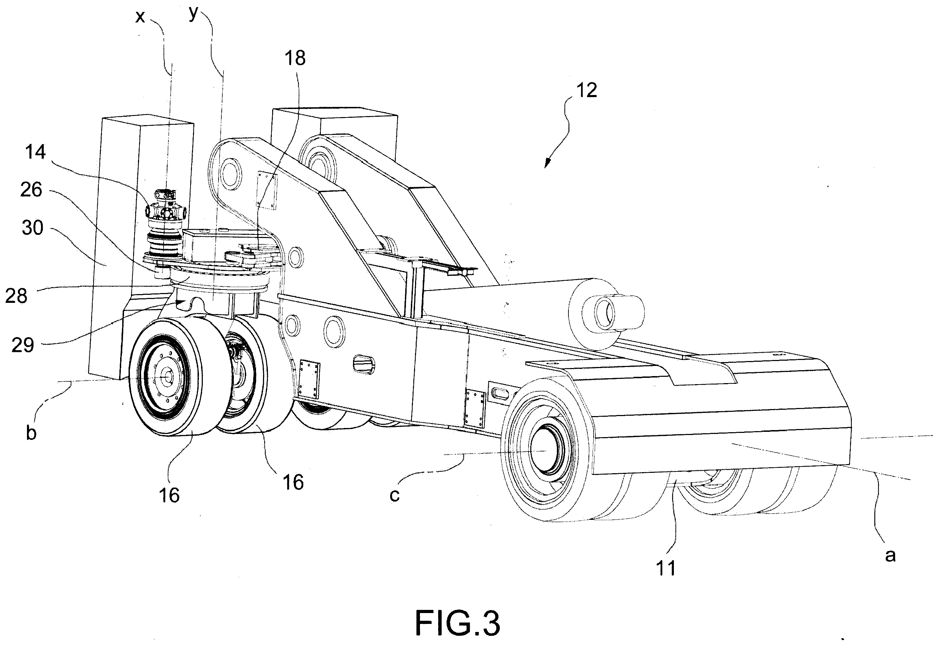

Referring initially to Figures 1 and 2, a steering system according to the prior art comprises a steering linkage or articulated linkage 18 coupled to a steering axle 10 of a vehicle 12 (partially visible in figure 3).

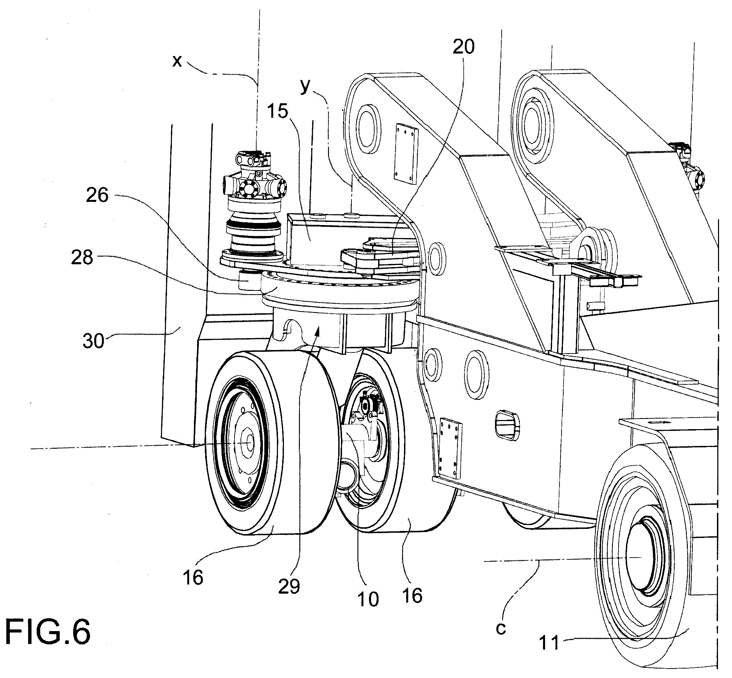

In the example illustrated herein, the steering axle 10 of the vehicle 12 is the rear axle, rotatable around a first transverse axis b, which axis b is parallel to and longitudinally spaced from a second transverse axis c, around which the front axle 11 of the vehicle is rotatable (figures 3 and 6). The vehicle is symmetrical with respect to a longitudinal center plane, identified by a longitudinal axis a.

Throughout the present description and in the claims, terms and expressions indicating positions and orientations, such as "longitudinal", "transverse", "vertical" or "horizontal", are to be referred to the longitudinal axis a.

Wheels 16, 17 are located on each side of the vehicle, rotating about respective vertical axis y, z by means of a steering torque exerted by the articulated linkage 18. The geometry of the linkage 18, as shown in Figure 2, is such to allow different steering angles for wheels located on opposite sides of the vehicle (particularly, as in a so-called Ackermann quadrilateral).

The steering torque is exerted by sliding a rigid rod 22, moved by a hydraulic cylinder 19, which drives a pair of steering connecting rods or tie rods 24 connected to the wheel arms.

As can be seen, the articulated linkage 18 is located on the same plane as the steering axle 10, and is therefore limited in length by the wheels 16, 17 (i.e., by the vehicle track). As already mentioned, such a coplanar arrangement of the articulated linkage 18 with respect to the steering axle 10 makes it difficult or impossible to achieve the optimum steering angles.

Figure 3 illustrates instead a vehicle equipped with a steering system according to one embodiment of the present invention.

Unlike the prior art, the articulated linkage 18 is mountable at a ground clearance which is bigger than the diameter of the wheels 16, 17. Accordingly, the articulated linkage 18 is not affected by the dimensional restrictions due to the axial encumbrance of the wheels 16, 17, and can then extend in length in a manner sufficient to ensure the optimal steering angles.

Conveniently, the articulated linkage 18 is connected or connectable to at least a pair of wheels 16, 17, which can be set in rotation by means of a steering member 29 (in the example herein illustrated, a vertical pin integral with a fifth wheel), which the linkage 18 is connected to. The steering member 29 is rotatable around the vertical steering axis y, z of the wheels 16, 17.

According to the embodiment illustrated herein, which is a preferred but not limiting embodiment, the actuating cylinder 19 is replaced by one or more handling means 14 (conveniently, hydraulic or electric motors), which can impart a rotation to the wheels 16, 17 of the vehicle 12 around the respective vertical steering axes y, z.

Unlike the prior art, according to which the steering is directly connected to the linkage 18 (causing the steering of the wheels), according to the present invention the handling means 14 may directly rotate the wheel which is connectable to, which rotation moves the articulated linkage 18 so as to transmit to the steering action to the wheel on the opposite side of the vehicle. In other words, at least one wheel 16, 17 is not rotated by the linkage 18, but by the motor 14 associated therewith.

In particular, the steering member 29 is mechanically interposed between the handling means 14, associated to at least one wheel 16, 17, and the articulated linkage 18, the steering member being connected to the drive shaft 10 for steering the at least one wheel 16, 17; in this way, the handling means 14 imparts the steering motion directly to the steering axle 29, which in turn transmits the motion to the articulated linkage 18 for steering the wheel on the opposite side of the vehicle.

In figure 3 the motor 14 is shown, such a motor 14 being operable in rotation about a first axis x, which is parallel to the second vertical axis y of the steering wheel 16, according to the example illustrated herein. According to non-illustrated mode, the first axis x may be coincident to the second vertical steering axis y, or inclined with respect to it (for example, the first axis x can be horizontal). Indeed, according to an embodiment not shown, the motor 14 may be coupled directly to the steering organ 29 connected to the steering axle shaft 10 of the steering wheels 16 (in which case, the first vertical axis x of rotation of the shaft of the motor 14 is coincident to the second vertical axis y for steering the wheels).

According to the embodiment illustrated herein, the motor 14 is misaligned with respect to the second vertical axis y of rotation, i.e. its axis of rotation x is vertical and parallel to said second axis y. In this case, the steering torque can be transmitted, by meshing of a first pinion 26, keyed to the output of the motor 14, with a crown gear 28, which is rotated by the pinion 26 about the second vertical axis y. The crown 28 is integral with the fifth wheel 29, so that the rotation of the crown imparts to the fifth wheel the angle of rotation, as it is necessary for steering the wheels 16.

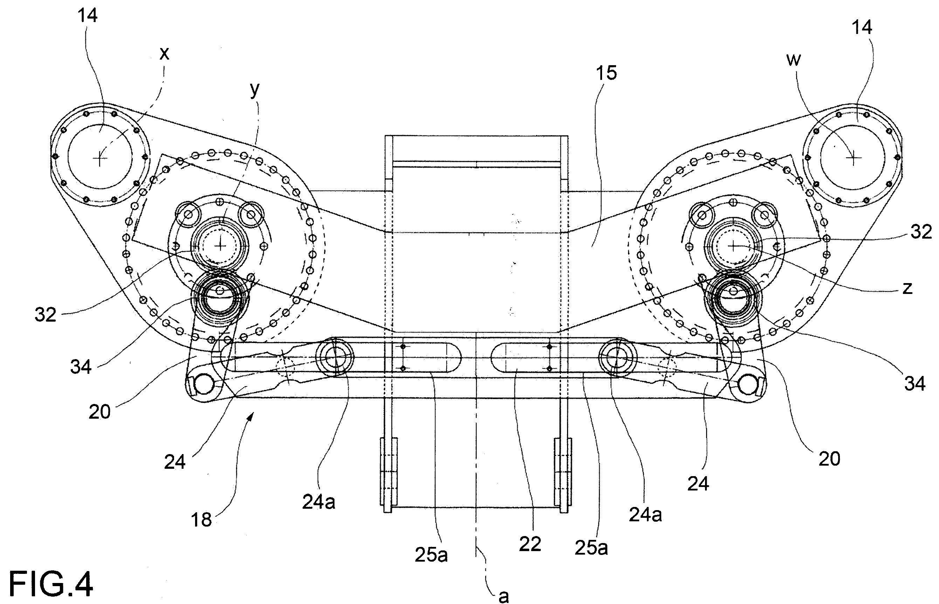

Instead of a single motor 14, Figure 4 schematically illustrates an embodiment of the steering system according to the present invention, in which there are two motors 14, mounted on opposite sides of the vehicle in a symmetrical position with respect to the longitudinal centerline axis a, said motors 14 operating in parallel on the wheels 16, 17 on the two sides of the vehicle.

The embodiment shown herein is configured so as to allow the steering system 9 to be laced in a front position with respect to the steering axis of the vehicle, i.e. between the steering axle 10 and the front axle 11. Accordingly, there is provided a saving in terms of overall dimensions, and an optimization of the vehicle performance and maneuverability. In order to enable the correct rotation of the wheels on opposite sides of the vehicle, so as to provide different steering angles on the wheels in such a way to prevent the sliding, the articulated linkage 18comprises, in addition to the driving rigid rod 22 and to steering tie rods or connecting rods 24, a pair of cranks 20 hinged at or in proximity of the vertical steering axes y, z of the wheels.

The configuration with the two connecting rods 24 and the two cranks 20 allow the rigid rod 22 to be moved along a direction which is maintained parallel to the plane which the vertical steering axes y, z lie on; by doing so, the sliding direction of the rod 22 is kept perpendicular to the vehicle center plane passing through the longitudinal axis a, without requiring said rigid rod to tilt, in order to achieve the kinematic mechanism.

According to a convenient embodiment, secondary pinions 32 are mounted in a concentric position with respect to the crowns 28, said secondary pinions being rotatable about respective vertical rotation axes y, z. The secondary pinions 32 mesh with and rotate the cranks 20, e.g. by means of a crown gear at one end of the crank or, as in the example shown herein, by means of respective counter-pinions 34, which the cranks 20 are hinged to; said cranks 20, rotating around a vertical axis parallel to said vertical axes of rotation y, z of the wheels, drive the connecting rods 24 causing the rigid rod 22 to slide and the consequent transmission of a steering torque from the wheels of one side of the vehicle to the wheels on the opposite side.

According to mode a not shown, the second pinion 32 may be coincident with the first pipinion 26 of the motor 14, e.g. according to the case in which the engine 14 is coaxial with respect to the vertical axis of rotation y, z of the wheels. Furthermore, the meshing of the second pinions 32 with the counter-pinions 34, associated to the cranks 20, is particularly useful where the articulated linkage 18 is placed rearwardly relative to the steering axle 10, as the steering linkage would move consistently with the desired direction of rotation of the wheels.

According to one embodiment, the rigid rod 22 slides within a frame 25, preferably provided with slots 25a (shown in Figure 4), in which shoes 24a are slidable, integral with the connecting rods 24 and/or the rod 22.

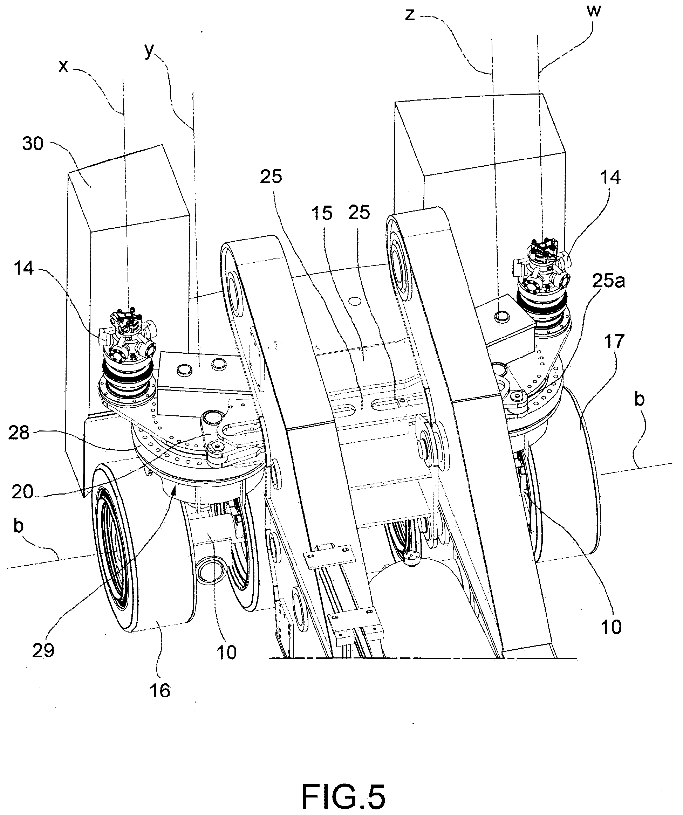

Two motors 14 are shown in figure 5, the second of which is drivable in rotation about a fourth axis w (in this example, the fourth axis w is vertical and parallel to the third axis of rotation z of the wheels 17 on the right side of the vehicle, according to the view in figure 5). The same considerations about the operating and the positioning of the first motor, as described above, apply to the second motor 14.

A reinforcing bracket 15 is also shown in Figure 5, such a bracket being optionally placed between the two steering members 29 that drive the steering of the two axle shafts 10, which the wheels 16, 17 are secured to.

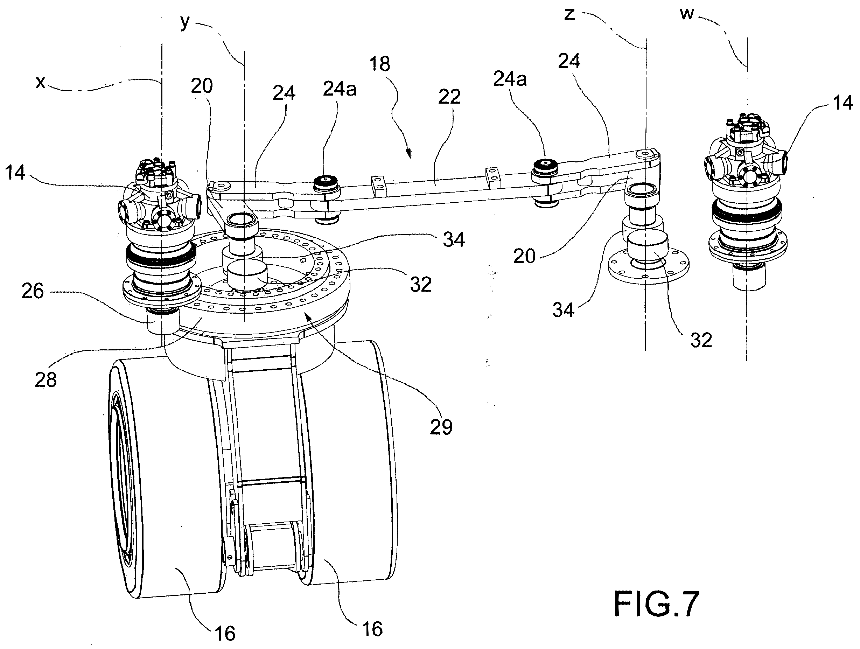

Figure 7 is a partial view of the steering system 9, in which the motors 14, the articulated linkage 18 and the gears providing the transmission between the two elements are shown. In the case of a single motor, the skilled in the art will appreciate that, preferably, the meshing of the first pinion 26 with the crown gear 28 does occur only on the motor-side of the vehicle, while the crown is not needed on the symmetrically opposite side (possibly, only the of pinion 32- counter-pinion 34 system would be needed).

According to a mode not shown, instead of being a motor pivotable about the respective axis x, w, the handling means 14 may be a linear actuator, connected to the steering member 29 associated to the wheel 16, 17 so as to cause the steering; in this case, for example, the steering member 29 may comprise a lever, hinged to the respective vertical steering axis y, z, which the handling means 14 acts on.

The advantage achieved is to have a reliable maneuvering system, little wear-sensible, with excellent performance in terms of consumption and operation accuracy, lightening of weights and overall dimensions reduction, so as to optimize the maneuverability of the vehicle even in confined spaces.

Various aspects and embodiments of a steering system for a self-propelled crane according to the invention have been described. It is to be understood that each embodiment can be combined with any other embodiment. The invention, moreover, is not limited to the embodiments described, but may be varied within the scope defined by the appended claims.

## Claims

1. A steering system (9), mountable on a steering axle (10) of a vehicle (12), comprising at least a pair of wheels (16, 17), symmetrical with respect to a longitudinal center axis (a) of the vehicle (12), and further comprising an articulated leverage (18),
said steering system (9) being **characterized in that** said articulated leverage (18) lies at a height from the ground which is greater than the diameter of said wheels (16, 17).

2. A system according to claim 1, wherein the wheels (16, 17) are rotatable about respective second and third vertical axes (y, z) by means of respective steering organs (29), mechanically associated to the articulated leverage (18).

3. A system according to claim 2, further comprising at least one movement means (14), able to impart a rotation to at least one first wheel (16) around the second vertical axis (y), wherein the steering organ (29) is mechanically interposed between said movement means (14) and said articulated leverage (18), said articulated leverage (18) cooperating with said at least one movement means (14) for imparting to the at least one second wheel (17), symmetrical to said first wheel (16), a rotation about the respective third vertical axis (z), such that the rotation angle of said second wheel (17) about said third vertical axis (z) is different from the rotation angle of said first wheel (16) around said second vertical axis (y).

4. A system according to claim 3, wherein the movement means (14) is a motor operable in rotation about a first vertical axis (x), said first vertical axis (x) being parallel or coincident to the second vertical axis (y), around which the at least one first wheel (16) of the vehicle (12) is pivotable.

5. A system according to any one of the preceding claims, in which the articulated leverage (18) comprises a pair of cranks (20), hinged about vertical axes coinciding with, or parallel to, said second and third vertical axis (y, z), respectively.

6. A system according to claim 5, wherein said cranks (20) are connected to a rigid rod (22) by means of respective connecting rods (24), in such a way that the rigid rod (22) is movable along a direction parallel to the plane containing said second and third vertical axes (y, z).

7. A system according to any one of the preceding claims from 3 to 6, wherein the output of the at least one motor (14) is a first pinion (26), which engages a respective crown (28) rotating about the second vertical axis (y), said crown (28) being adapted to cause the rotation of the at least one first wheel (16) around said second vertical axis (y).

8. A system according to any one of claims from 3 to 7, comprising two movement means (14) operable in parallel.

9. A system according to any one of claims from 3 to 8, wherein the articulated leverage (18) is interposed between the steering axle (10) and the frame of the vehicle (12).

10. A system according to any one of claims from 3 to 9, wherein said cranks (20) of the articulated leverage (18) engage respective second pinions (32), respectively rotatable about the second and third vertical axis (y, z).

11. A system according to claim 10, wherein at least one of said second pinions (32) is rotatable integrally with the respective crown (28).
